# EUROPEAN PATENT APPLICATION

(11) **EP 2 924 640 A1**
(43) Date of publication of application: **30.09.2015**
(21) Application number: 12888661.1
(22) Date of filing: 28.12.2012
(51) Int. Cl.: G06Q 20/40, G06Q 20/32

(54) **MOBILE PAYMENT SYSTEM AND MOBILE PAYMENT METHOD USING DYNAMIC TRACK 2 INFORMATION**

(30) Priority: 20.11.2012 KR 20120131524
(71) Applicant: Shinhancard Co., Ltd., Seoul 100-709 (KR); KB Kookmincard Co., Ltd., Jongno-gu Seoul 110-719 (KR); Hyundai Card Co., Ltd., Seoul 150-872 (KR); Nonghyup Bank, Seoul 100-151 (KR); Lotte Card Co., Ltd., Seoul 100-778 (KR); Samsung Card Co., Ltd., Seoul 100-742 (KR)
(72) Inventor: PARK, Hae chul, Seoul 156-030 (KR); KIM, Byungsoo, Seoul 140-040 (KR); LEE, Jeongjin, Seoul 138-220 (KR)
(74) Representative: Thibon, Laurent
(86) International application number: PCT/KR2012/011681
(87) International publication number: WO 2014/081073

(57) **Abstract**

The present invention relates to a mobile payment method using dynamic track 2 information, which provides a mobile payment environment having improved security by: enabling a card company server to process all encoding and decoding steps for track 2 information; and preventing a payment device, a card reader, and a relay server from being involved in the encoding and decoding steps.

## Description

### Technical Field

The present invention generally relates to a mobile payment system and method. More particularly, the present invention relates to a mobile payment system and method using dynamic track 2 information, which improve security of track 2 information in a mobile payment environment by including encrypted track 2 information in an authorization request message that is delivered from a payment device such as a smart phone or a mobile phone to a relay server via a card reader, and by performing encryption and decryption of the track 2 information only in a card company server.

### Background Art

Credit cards can be used instead of cash when card holders make payment. These days, electronic credit cards in which an integrated circuit (IC) chip is embedded are widely used. Because of the use of IC chips, electronic credit cards can store more information than magnetic credit cards that use an existing magnetic strip and can perform active operations using the IC chips. Recently, using such a characteristic, a measure for preventing card information from being stolen or exposed, in which track 2 (ISO/IEC 7813) information within a credit card is encrypted using an IC chip and then delivered to a card reader, has been proposed. However, it is difficult to completely apply the measure to payment logic in which the magnetic credit cards with an existing magnetic strip are used. To apply electronic credit cards to the existing payment logic, a card reader or a relay server, for example, a Value Added Network (VAN) server should have a function for decrypting the track 2 information (ISO/IEC 7813) that has been encrypted and transmitted by the electronic credit cards. Track 2 information contains a Bank Information Number (BIN) that indicates to which card company server a relay server transmits the track 2 information. If the BIN is encrypted in the electronic credit card, the relay server necessarily decrypts the track 2 information and extracts the BIN in order to transmit the track 2 information to the relevant card company server.

As a method for encrypting track 2 information, PCT application patent WO 2003/081832 discloses a method and system for conducting a transaction using a proximity device. The method and system according to WO2003/081832 use a proximity device that improves security of a credit card having an existing magnetic strip by recording a dynamic authentication code in a discretionary data (DD) area of track 2 information, which includes a primary account number (PAN) area, an expiration date (ED) area, a service code (SC) area, and the DD area, and by conducting a transaction using the dynamic authentication code. However, the method and system according to WO2003/081832 require decryption in a relay server (for example, a VAN server) to decrypt a dynamically changed Card Validation Code (CVC) value. Therefore, when a VAN server is arranged as a relay server between a credit card and a card company server as in Korea, a burden may occur in development and maintenance of a system for enabling the relay server to decrypt the dynamic CVC value.

### Disclosure

### Technical Problem

An object of the present invention is to provide a mobile payment system and method using dynamic track 2 information, in which only a card company server encrypts track 2 information and decrypts the encrypted track 2 information so that the encryption and decryption processes are unknown to others; and in which high security of payment is ensured within a mobile environment using payment devices such as smart phones.

### Technical Solution

According to the present invention, the above object is accomplished by a mobile payment method using dynamic track 2 information, which is performed by a mobile payment system that is connected by a network to a relay server and a payment device, the mobile payment method including: generating a dynamic PAN in which a remaining PAN (Primary Account Number) area, excluding a BIN (Bank Information Number), is encrypted and generating dynamic track 2 information that includes the dynamic PAN when track 2 information for mobile payment is requested by the payment device, the PAN being included in the track 2 information; transmitting the dynamic track 2 information to the payment device; and extracting the PAN by decrypting the dynamic track 2 information when the dynamic track 2 information is received via the relay server, and determining a payment account of the payment device with reference to the extracted PAN.

According to the present invention, the above object is accomplished by: a dynamic track 2 generation module, which generates a dynamic PAN in which a remaining area that excludes a BIN (Bank Information Number) from a PAN (Primary Account Number) area of track 2 information is encrypted, generates dynamic track 2 information including the dynamic PAN, and transmits the dynamic track 2 information to a payment device when the track 2 information for mobile payment is requested by the payment device; a dynamic track 2 decryption module, which decrypts the dynamic track 2 information and extracts track 2 information when the dynamic track 2 information is received via the relay server; and a validity determination module, which determines a payment limit and payment validity of the decrypted track 2 information and provides a result of the determination to the relay server.

According to the present invention, the above object is accomplished by a mobile payment method using dynamic track 2 information, which is performed by a mobile payment system that is connected by a network to a relay server and a payment device, the mobile payment method including: dividing a PAN area of track 2 information for the payment device into a first area that includes a BIN, and dividing a remaining area excluding the BIN into a second area and a third area, when the track 2 information for mobile payment is requested by the payment device; forming dynamic track 2 information by encrypting any one of the second area and the third area, excluding the first area; providing the dynamic track 2 information to the payment device and forming the track 2 information by decrypting any one of the second area and the third area when the dynamic track 2 information is provided from the relay server; and determining a payment account of the payment device with reference to the decrypted track 2 information.

### Advantageous Effects

According to the present invention, a card company server performs all encryption and decryption processes of track 2 information; and a payment device, a card reader, and a relay server are prevented from being involved in the encryption and decryption processes, whereby a mobile payment environment having improved security can be provided.

### Description of Drawings

FIG. 1 illustrates a schematic diagram for encryption and decryption methods in a mobile payment system according to an embodiment of the present invention;
FIG. 2 illustrates a reference view for an example in which a dynamic PAN is formed in a mobile payment system;
FIG. 3 illustrates a block diagram of a mobile payment system according to an embodiment of the present invention;
FIG. 4 illustrates a flow diagram for a mobile payment method using dynamic track 2 information according to an embodiment of the present invention;
FIG. 5 illustrates an example of a dynamic track 2 information type;
FIG. 6 illustrates a schematic diagram for a mobile payment method using dynamic track 2 information according to another embodiment of the present invention;
FIG. 7 and 8 illustrate reference views for an example of a one-dimensional bar code or QR code interface, which is displayed in a payment device; and
FIG. 9 illustrates a reference view of an example of dynamic track 2 information.

### Best Mode

A payment device mentioned herein may mean a device capable of payment in a mobile environment. As the device capable of payment in a mobile environment, there are a mobile phone, a smart phone, a laptop, a personal digital assistant (PDA), and the like. Besides, it may indicate a portable device capable of wireless communication, in which a Universal Subscriber Identity Module (USIM) chip or a finance chip that financial companies provides to substitute for the payment by credit cards, is mounted. Here, a portable terminal includes a smart phone, a mobile phone, a tablet PC, a laptop, and a PDA, and it may refer to an electronic device that enables a user to use wireless data communication while carrying the device.

"A credit card" mentioned herein may mean a portable terminal for substituting for a credit card, as well as a credit card itself.

In a mobile payment environment, if a portable terminal can make payment though it does not have a separate finance chip, and if the terminal is a device that can transmit track 2 information of ISO/IEC 7813, which is a data standard for credit cards, to a card reader or to a card company server, the device may be referred to as "a credit card".

A relay server mentioned herein may mean a server arranged between a card reader and a card company server. Also, the relay server may mean a Point Of Sales system (POS) server that is connected by network to a card company server or a VAN server. The relay server may be a Value Added Network (VAN) server that collects and manages sales statements on behalf of card companies each when a card reader transmits payment data to a card company server, and that identifies card company information in the payment data transmitted from the card reader and provides the payment data to a corresponding card company.

A card reader mentioned herein may include a card reader that reads track 2 information from existing magnetic strip (MS) credit cards, a card reader that reads track 2 information by being contacted with an IC chip embedded in existing electronic credit cards, and a card reader that obtains track 2 information from portable terminals by performing wireless local area communication with the portable terminals such as a mobile phone or a smart phone. Because track 2 information within a portable terminal is basically the same as (or similar to) that contained in electronic credit cards, a device that obtains track 2 information through the portable terminal and the existing card readers are commonly called a card reader.

Accordingly, a card reader may mean a device that reads track 2 information of ISO (International Standardization Organization)/IEC 7813 standards and transmits the information to a relay server or a card company server when, among a MS credit card, an electronic credit card, a portable terminal in which a USIM chip or finance chip is embedded, and a portable terminal that can identify a user using UUID or MAC address, any one is touched on the card reader or placed close to the card reader.

Track 2 information mentioned herein may mean data according to ISO/IEC 7813 standards.

In this specification, a payment device can perform wireless local area communication with a card reader. In this case, the payment device has a Near Field Communication (NFC) enabled chip that is separately mounted in the portable terminal or has an NFC-enabled chip integrated into a USIM chip.

An encryption method mentioned herein may mean a method based on algorithms including Advanced Encryption Standard (AES), Rivest, Shamir, Adleman (RSA), Data Encryption Standard (DES), Triple DES (TDES), and Academy Research Institute Agency (ARIA). Not otherwise specified, any one algorithm among AES, RSA, DES, TDES, and ARIA can be applied. Besides, various encryption algorithms can be used and not specifically limited. Because rather than describing an encryption method itself, the present invention places emphasis on an encrypted track 2 data area and the security improved by making a single main agent (mobile payment system) perform encryption and decryption.

Hereinafter, the present invention is described in detail referring to the drawings.

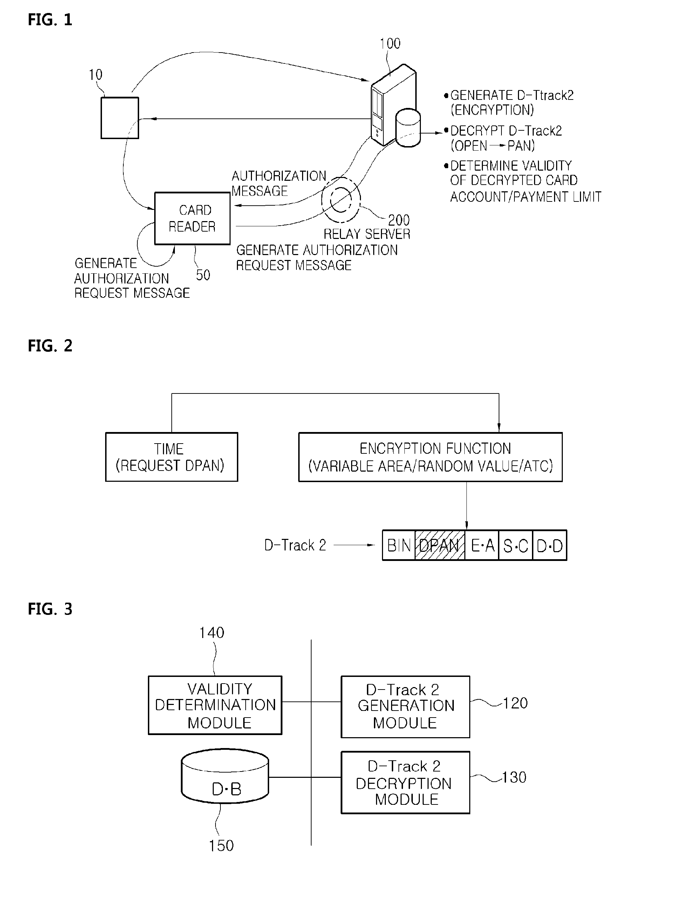

FIG. 1 illustrates a schematic diagram for encryption and decryption methods in a mobile payment system according to an embodiment of the present invention.

Referring to FIG. 1, when card information is requested by a payment device, a mobile payment system according to an embodiment identifies the payment device by referring to a unique number allocated in the payment device, for example, a phone number or an ESN of a smart phone, and may retrieve the card information for the identified payment device.

In the case of tablet PC, a Universal Unique Identifier (UUID) or a MAC address can be referred to for the identification of the device. A UUID or a MAC address can be also applied to digital devices such as laptops or palmtop computers.

Card information is included in track 2 information according to ISO/IEC 7813 standards, and may include a Primary Account Number (PAN) area that consists of 16 digits of a sequence of numbers (or characters). When the PAN area consists of 16 digits of numbers, the first 8 digits indicates a BIN and the next 8 digits may correspond to a card number.

Also, when the PAN area consists of 16 digits of numbers, the mobile payment system 100 may maintain the first 8 digits, and encrypt the next 8 digits using an encryption algorithm. As the encryption algorithm, algorithms such as AES, RSA, DES, TDES, and ARIA can be applied. Besides, various encryption algorithms can be used without limitation to the above-described algorithms.

Hereinafter, the encrypted track 2 information is referred to dynamic track 2 information.

Dynamic track 2 information is characterized by having an unencrypted BIN, and there is no risk even though the BIN is exposed outside the system or exposed to others while the dynamic track 2 information is transmitted from the mobile payment system 100 to a card reader 50 via a payment device 10, provided to a relay sever 200 from the card reader 50, and finally replied from the relay server 200 to the mobile payment system 100. The exposed BIN indicates only to which card company server the payment device 10 sends the payment request, and it does not mean or indicate information such as the payment amount, a card holder identity, personal information of the card holder, and a card number.

On the other hand, as the remaining PAN area excluding the BIN is encrypted using an encryption algorithm, the dynamic 2 information cannot be used even though it is acquired by others.

Because of such a characteristic, a new security solution can be applied without changing a payment process using an existing magnetic strip (for example, a payment process passing through a magnetic credit card - a card reader - a relay server - a card company server).

The dynamic track 2 information can be formed by the following two methods.
1) In Track 2 information of ISO/IEC 7813 standards, a PAN area is divided into a BIN as a first area, and the remaining area excluding the BIN as a second area, and then the second area is encrypted. In this case, the second area can be encrypted using any one of algorithms including AES, RSA, DES, TDES, and ARIA.
2) In Track 2 information of ISO/IEC 7813 standards, a BIN of a PAN area is set to a first area, and the remaining area of the track 2 information, which includes Expiration Date (ED), Service Code (SC), and Discretionary Date (DD), is set to a second area, and then the second area is encrypted using the algorithm mentioned in the above method 1).

The relay server 200 is arranged between the card reader 50 and the mobile payment system 100, and it may mean a VAN server of a Value Added Network (VAN) company generally in Korea. As a BIN of dynamic track 2 information is not encrypted, when an authorization request message is transmitted through the card reader 50, the relay server 200 can determine to which card company server to transmit the authorization request message. In this embodiment, the mobile payment system 100 corresponds to the target that receives the authorization request message of the card reader 50 from the relay server 200.

The authorization request message may include the payment amount, affiliate membership information (or an affiliate membership code), and the dynamic track 2 information provided from the payment device 10. The authorization request message can be encrypted or not. Though the authorization request message is not encrypted, there is no concern that the track 2 information is decrypted and illegally used by others. The dynamic track 2 information is encrypted in the mobile payment system 100, and decrypted also in the mobile payment system 100. In other words, both encryption and decryption are performed in the single mobile payment system 100. Accordingly, the relay server 200, the payment device 10, and the card reader 50 cannot know the encryption and decryption methods, and are not involved in the encryption and decryption processes. In other words, any information about encryption and decryption methods is not left in the relay server 200, the payment device 10, and the card reader 50.

FIG. 2 illustrates a reference view for an example in which a dynamic PAN is formed in a mobile payment system.

Referring to FIG. 2, a mobile payment system 100 may generate a random value when dynamic track 2 information is requested by a payment device 10, or generate a random value using the time when the dynamic track 2 information requested by the payment device 10.

When the random value is generated using the time when the track 2 information is requested by the payment device 10, the mobile payment system 100 sets the random value, a PAN area of the track 2 information excluding a BIN, and an Application Transaction Count (ATC), to input values of an encryption process, and generates a dynamic PAN by performing the encryption process. The encryption algorithm is the same as the above-mentioned algorithm in method 1)

By replacing the PAN area of the track 2 information with the generated dynamic PAN, the track 2 information can be converted into dynamic track 2 information. Because the random value and the ATC have the different values whenever payment is made, the payment device 10 can provide a card reader 50 with dynamic track 2 information having a different value whenever the payment is made.

FIG. 3 illustrates a block diagram of a mobile payment system according to an embodiment of the present invention.

Referring to FIG. 3, the mobile payment system 100 may include a dynamic track 2 generation module 120, a dynamic track 2 decryption module 130, a validity determination module 140, and a database 150.

When a payment device 10 requests track 2 information, the dynamic track 2 generation module 120 generates a random value with reference to the time when the track 2 information is requested by the payment device 10; and generates encrypted track 2 information (dynamic track 2 information) by inputting the generated random value, an ATC of the payment device 10, and track 2 information of credit card account information that is previously registered in the database 150, into an encryption process and by performing the encryption process.

The dynamic track 2 information is wirelessly transmitted to the payment device 10; the payment device 10 transmits the dynamic track 2 information to the card reader 50; and the card reader 50 generates an authorization request message including the dynamic track 2 information, the payment amount, and affiliate membership information, and transmits it to a relay server 200. Using an unencrypted BIN of the dynamic track 2 information, the relay server 200 transmits the authorization request message to the mobile payment system 100. Accordingly, via the relay server 200, the mobile payment system 100 can acquire the dynamic track 2 information that has been initially generated by the dynamic track 2 generation module 120.

The dynamic track 2 decryption module 130 obtains dynamic track 2 information from the authorization request message that is transmitted through the relay server 200, and may extract track 2 information by decrypting the dynamic track 2 information. The extracted track 2 information is provided to the validity determination module 140. With reference to the account information stored in the database 150, the validity determination module 140 determines whether a credit card can be used and whether the payment amount exceeds a payment limit (for example, a daily use limit). As a result of the determination, when the payment amount satisfies the payment limit and the credit card is valid, it is determined whether the payment amount exceeds a single use limit. Then, when the payment amount is within the payment limit and the credit card is valid, the validity determination module 140 can transmit whether the payment is authorized to the relay server 200.

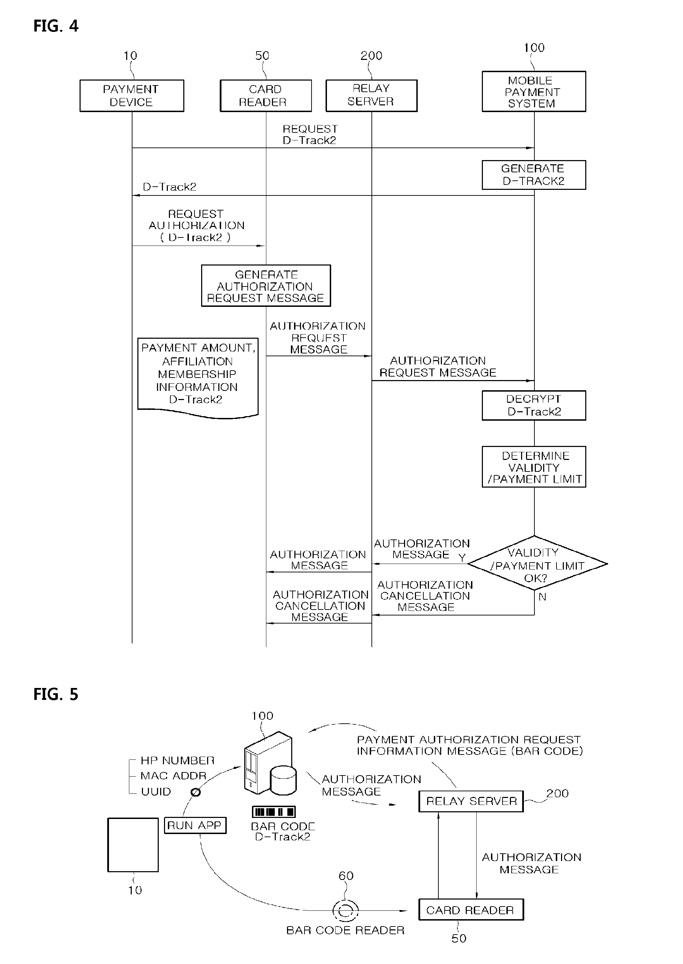

FIG. 4 illustrates a flow diagram for a mobile payment method using dynamic track 2 information according to an embodiment of the present invention.

Referring to FIG. 4, first, a payment device 10 runs an app for mobile payment; connects to a mobile payment system 100 through a wireless network (for example, 3G, 4G, and Wi-Fi network) using the run app; and requests dynamic track 2 information from the mobile payment system 100. Next, the mobile payment system 100 generates dynamic track 2 information by receiving an ATC, a PAN area excluding a BIN, and a random number that is generated with reference to the time when the payment device 10 requests the dynamic track 2 information, as input values of an encryption process and by performing the encryption process. Then, the mobile payment system 100 may transmit the generated dynamic track 2 information to the payment device 10 through a wireless network (3G, 4G, Wi-Fi, etc.). In this case, the dynamic track 2 information has an encryption area in which only the remaining PAN area excluding the BIN is encrypted, or in which the remaining track 2 information excluding the BIN is encrypted.

Here, the dynamic track 2 information may have a type of ASCII values, HEXA values, a one-dimensional bar code, or a QR code.

After receiving the dynamic track 2 information from the mobile payment system 100, the app installed in the payment device 10 transmits the information to a card reader for the payment authorization, without storing the information in a separate memory. The card reader 50 generates an authorization request message including a payment amount for goods or services, affiliate membership information of the card reader 50, and the dynamic track 2 information, and may provide the generated authorization request message to a relay server 200.

The relay server 200 determines a target to which the authorization request message is transmitted, referring to the unencrypted BIN within the dynamic track 2 information that is included in the authorization request message. As a result of the determination, when the target is the mobile payment system 100, the relay server 200 transmits the authorization request message to the mobile payment system 100. The mobile payment system 100 extracts the dynamic track 2 information from the transmitted authorization request message and obtains track 2 information, which is a data type for being stored in a database 150, by decrypting the extracted dynamic track 2 information.

After obtaining the decrypted track 2 information, the mobile payment system 100 determines whether a credit card can be used and whether the payment amount exceeds a payment limit by retrieving from the database 150, so as to determine the validity of the authorization request message. When the validity is accepted, the mobile payment system 100 provides an authorization message to the relay server 200, whereas when the validity is denied, the mobile payment system 100 may transmit an authorization cancellation message to the relay server 200.

FIG. 5 illustrates an example of a dynamic track 2 information type.

Referring to FIG. 5, when a payment device 10 requests dynamic track2 information from a mobile payment system 100 after running an app, the mobile payment system 100 may provide dynamic track 2 information that has a type of one dimensional bar code (or a QR code) to the payment device 10.

Using the app installed in the payment device 10, the bar code type of the dynamic track 2 information, which is provided from the mobile payment system 100, may be placed close to a bar code reader 60 connected to a card reader 50. When the payment device 10 is a mobile phone or a smart phone, the one-dimensional bar code (or the QR code) can be displayed on a screen of the phone.

The bar code reader 60 scans the one-dimensional bar code (or the QR code) that is displayed on the screen, recognizes the dynamic track 2 information through the scanned value, and provides the recognized information to the card reader 50. The card reader 50 generates an authorization request message by including the payment amount and affiliation membership information in the dynamic track 2 information, and may transmit the generated authorization request message to the mobile payment system 100. The process after that is the same as the above description that is referred to FIG. 4.

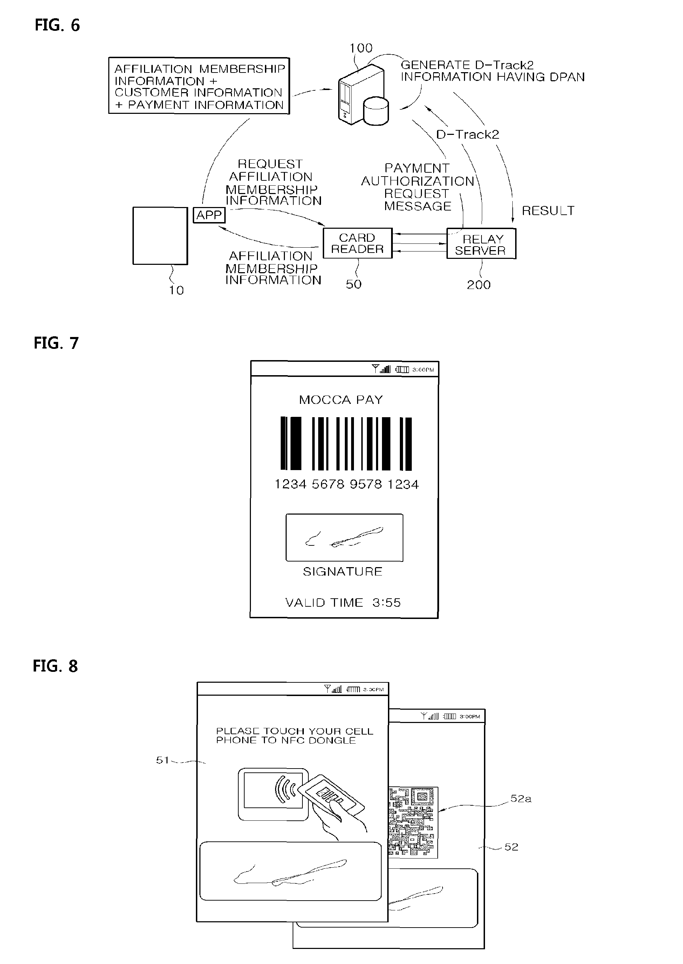

FIG. 6 illustrates a schematic diagram for a mobile payment method using dynamic track 2 information according to another embodiment of the present invention.

Referring to FIG. 6, the mobile payment method using dynamic track 2 information according to another embodiment is as follows: a payment device 10 requests and receives affiliation membership information from a card reader 50; the payment device 10 provides a mobile payment system 100 with the affiliation membership information, customer information (for example, information of a mobile phone), and the payment amount information; and the mobile payment system 100 may generate a payment authorization request message using the affiliation membership information, the customer information (for example, a phone number of a mobile phone), and the payment amount information. In this case, the mobile payment system 100 may include dynamic track 2 information in the payment authorization request message. Because the dynamic track 2 information included in the payment authorization request message is generated by the same method as the above description with reference to FIG. 1 to 4, the repeated descriptions are omitted.

The payment authorization request message including the dynamic track 2 information is provided to the card reader 50, and the card reader 50 transmits the payment authorization request message obtained from the mobile payment system 100 to a relay server 200. The relay server 200 may transmit the payment authorization request message to the mobile payment system 100 again. This method compels the payment device 10 not to have any information related to a credit card in a mobile payment environment, thus reducing a security risk that may be caused by the loss or stealing of the payment device 10.

FIG. 7 and 8 illustrate reference views for an example of a one-dimensional bar code or a QR code that is displayed in a payment device.

First, FIG. 7 illustrates that dynamic track 2 information that is provided from a mobile payment system 100 to a payment device 10 is a one-dimensional bar code type.

The illustrated dynamic track 2 information has a bar code type, and an app installed in the payment device 10 displays the one-dimensional bar code type of track 2 information, which is received from the mobile payment system 100, on a screen. Then, when a card holder places the one-dimension bar code displayed in the payment device 10 close to a bar code reader (for example, reference numeral 60 in FIG. 5), the bar code reader may obtain the one-dimensional bar code type of dynamic track 2 information.

FIG. 8 illustrates a reference view for an example in which a QR code is displayed in a payment device. Referring to FIG. 8, a mobile payment system 100 provides a payment device 10 with a QR code type of dynamic track 2 information, and the payment device 10 displays the QR code 52a on a screen 52. While the QR code 52a is displayed on the screen 52, the dynamic track 2 information can be transmitted to a card reader 50 by placing the screen 52 close to a bar code reader (for example, reference numeral 60 in FIG. 5). In this case, a signature of a card holder can be also displayed on the screen 52. The signature displayed on the screen 52a is provided from the mobile payment system 100 to the payment device, or it may be written through a touch input by the card holder if the screen 52a is a touch screen.

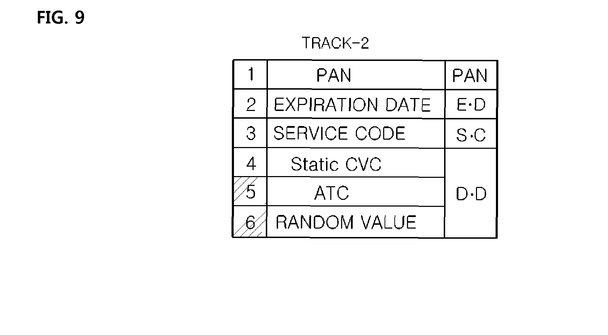

FIG. 9 illustrates a reference view of an example of dynamic track 2 information.

Referring to FIG. 9, dynamic track 2 information is composed of a PAN area, an ED area, an SC area, and a DD area, and it may include a factor that is necessary for encryption of the PAN area in a mobile payment system 100.

Algorithms such as AES, RSA, DES, TDES, and ARIA can be applied to the encryption of the PAN area. Besides, various encryption algorithms can be used.

For the encryption of the PAN area, a random value is required. Additionally, an ATC, which is the previous transaction count of the payment device, can be used an input value of the encryption algorithm. In this case, the random value and the ATC can be arranged in the DD area of the dynamic track 2 information. The DD area corresponds to a data field that can be optionally used by a finance company, and in addition to the random value and the ATC, a card validation code (CVC) of a credit card can be included in the DD area.

Using the structure of the dynamic track 2 information that is illustrated in FIG. 9, when an authorization request message including the dynamic track 2 information is transmitted from a relay server 200, the mobile payment system 100 may obtain the random value and the ATC, which are used for decryption of the dynamic track 2 information, from the DD area of the dynamic track 2 information within the authorization request message.

In other words, when the dynamic track 2 information, which is initially transmitted from the mobile payment system 100 to the payment device 10, returns via the relay server 200, the mobile payment system 100 may decrypt the dynamic track 2 information using the ATC and the random value, which are included in the DD area.

### <Description of the Reference Numerals in the Drawings>

10: payment device 50: card reader
60: bar code reader 100: mobile payment system
200: relay server

### Industrial Applicability

In credit transactions using a credit card or a portable terminal such as a mobile phone or a smart phone, the present invention prevents the credit card and the portable terminal from being involved in encryption and decryption processes, whereby payment security of the credit card and the portable terminal can be improved. The present invention may contribute to expansion of mobile payment of a credit card company and the finance industry.

## Claims

1. A mobile payment method using dynamic track 2 information, which is performed by a mobile payment system that is connected by a network to a relay server and a payment device, comprising:
generating a dynamic PAN, which is an encrypted PAN (Primary Account Number) area excluding a BIN (Bank Information Number), and dynamic track 2 information inclusive of the dynamic PAN when track 2 information for mobile payment is requested by the payment device, wherein the PAN is included in the track 2 information;
transmitting the dynamic track 2 information to the payment device; and
extracting the PAN by decrypting the dynamic track 2 information when the dynamic track 2 information is received via the relay server, and determining a payment account of the payment device with reference to the extracted PAN.

2. The mobile payment method of claim 1, wherein generating the dynamic track 2 information comprises:
determining a PAN for the payment device using a unique information allocated to the payment device; and
encrypting a remaining PAN area that excludes the BIN.

3. The mobile payment method of claim 2, wherein the unique information is any one of a phone number of a portable terminal, an ESN (Electronic Serial Number) of a portable terminal, a UUID (Universal Unique Identifier), and a MAC ADDRESS.

4. The mobile payment method of claim 1, wherein in transmitting the dynamic track 2 information to the payment device, the dynamic track 2 information is transmitted using a wireless network.

5. The mobile payment method of claim 1, wherein the payment device requests payment by providing the dynamic track 2 information to a card reader.

6. The mobile payment method of claim 1, further comprising, after determining the payment account,
determining validity by determining validity of the payment account and by determining whether a payment limit is available.

7. The mobile payment method of claim 6, further comprising, after determining the validity,
transmitting to the relay server, whether the payment is authorized according to the validity of the payment account.

8. The mobile payment method of claim 1, wherein the dynamic track 2 information is formed by dividing the PAN area into a first area, in which the BIN is included, and a second area, in which the BIN is not included, and by encrypting the second area.

9. The mobile payment method of claim 1, wherein the dynamic track 2 information is formed by dividing the track 2 information into a first area, in which the BIN is included, and a second area, in which the BIN is not included, and by encrypting the second area.

10. The mobile payment method of claim 1, wherein the relay server is any one of a VAN (Value Added Network) server and a POS (Point Of Sales system) server.

11. The mobile payment method of claim 1, wherein the dynamic track 2 information includes a PAN area, an ED (Expiration Date) area, an SC (Service Code) area, and a DD (Discretionary Data) area, and the DD area includes any one of an ATC, a CVC, and a random value for forming the dynamic PAN.

12. A mobile payment system using dynamic track 2 information, comprising:
a dynamic track 2 generation module, which generates a dynamic PAN in which a remaining area that excludes a BIN (Bank Information Number) from a PAN (Primary Account Number) area of track 2 information is encrypted, generates dynamic track 2 information including the dynamic PAN, and transmits the dynamic track 2 information to a payment device when the track 2 information for mobile payment is requested by the payment device;
a dynamic track 2 decryption module, which decrypts the dynamic track 2 information and extracts track 2 information when the dynamic track 2 information is received via the relay server; and
a validity determination module, which determines a payment limit and payment validity of the decrypted track 2 information and provides a result of the determination to the relay server.

13. The mobile payment system of claim 12, wherein the dynamic track 2 information is included in an authorization request message that is transmitted from the relay server.

14. A mobile payment method using dynamic track 2 information, which is performed by a mobile payment system that is connected by a network to a relay server and a payment device, comprising:
dividing a PAN area of track 2 information for the payment device into a first area that includes a BIN, and dividing a remaining area excluding the BIN into a second area and a third area, when the track 2 information for mobile payment is requested by the payment device;
forming dynamic track 2 information by encrypting any one of the second area and the third area, excluding the first area;
providing the dynamic track 2 information to the payment device and forming the track 2 information by decrypting any one of the second area and the third area when the dynamic track 2 information is provided from the relay server; and
determining a payment account of the payment device with reference to the decrypted track 2 information.
